# EUROPEAN PATENT APPLICATION

(11) **EP 4 376 457 A1**
(43) Date of publication of application: **29.05.2024**
(21) Application number: 21950899.1
(22) Date of filing: 19.07.2021
(51) Int. Cl.: H04W 8/22, H04W 16/32, H04W 72/04, H04W 92/20

(54) **BASE STATION, WIRELESS COMMUNICATION SYSTEM, AND COMMUNICATION METHOD**

(71) Applicant: NTT DOCOMO, INC., Tokyo 100-6150 (JP)
(72) Inventor: TANIGUCHI, Masato, Tokyo 100-6150 (JP)
(74) Representative: Hoffmann Eitle
(86) International application number: PCT/JP2021/027045
(87) International publication number: WO 2023/002545

(57) **Abstract**

A base station includes a transmission unit configured to transmit auxiliary information used for determining a band usable for dual connectivity in a terminal to another base station; and a reception unit configured to receive configuration information generated based on the auxiliary information from the other base station.

## Description

### TECHNICAL FIELD

The present invention relates to a wireless communication system and a base station.

### BACKGROUND ART

In the 3GPP (3rd Generation Partnership Project), a wireless communication scheme called 5G or NR (New Radio) (hereinafter referred to as "NR") has been proposed in order to realize further increase in system capacity, further increase in data transmission rate, further reduction in delay in a wireless section, and the like. In 5G, in order to satisfy the requirement of latency of 1 ms or less in a wireless section while achieving a throughput of 10 Gbps or greater, studies on various wireless technologies and network architecture have been carried out (for example, Non-Patent Document 1).

In addition, DC (Dual connectivity) in which a terminal connects to a core network while simultaneously communicating with a plurality of base stations has been specified (for example, Non-Patent Documents 2 to 4). A terminal in which DC is configured communicates with a base station called a master node (MN) and a base station called a secondary node (SN).

### Related Art Document

### Non-Patent Documents

Non-Patent Document 1 : 3GPP TS 38.300 V16. 6.0 (2021 - 06)
Non-Patent Document 2 : 3GPP TS 37.340 V16. 6.0 (2021 - 06)
Non-Patent Document 3 : 3GPP TS 38.101 - 3 V16. 8.0 (2021 - 06)
Non-Patent Document 4 : 3GPP TS 38.331 V16. 4.1 (2021 - 03)

### SUMMARY OF THE INVENTION

### Problems to be Solved by the Invention

At the time of configuring the DC, the MN notifies the SN of candidates for band combinations that can be configured by the SN. Furthermore, it is also considered to transmit terminal capability information indicating availability of simultaneous transmission and reception for each band pair from the MN to the SN.

However, since the SN cannot know a band actually used by the MN, there is a possibility that, in DC, the SN cannot appropriately determine a band that can be configured for the terminal and cannot appropriately create configuration information for the terminal on the SN side.

The present invention has been made in view of the above circumstances, and an object thereof is to provide a technique for a base station to appropriately determine a band usable in a terminal for dual connectivity.

### Means for solving the problem

According to the disclosed technique, there is provided a base station including:
a transmission unit configured to transmit auxiliary information used for determining a band usable for dual connectivity in a terminal to another base station; and
a reception unit configured to receive configuration information generated based on the auxiliary information from the other base station.

### Effects of the Invention

According to the disclosed technology, there is provided a technique for a base station to appropriately determine a band usable in a terminal for dual connectivity.

### BRIEF DESCRIPTION OF THE DRAWINGS

[Fig. 1] FIG. 1 is a diagram for explaining an example of a wireless communication system according to an embodiment of the present invention;
[Fig. 2] FIG. 2 is a diagram showing an example of band combinations in EN-DC;
[Fig. 3] FIG. 3 is a diagram showing an example of band combinations in EN-DC;
[Fig. 4] FIG. 4 is a diagram for explaining an operation example in an embodiment;
[Fig. 5] FIG. 5 is a diagram for explaining an operation example in an embodiment;
[Fig. 6] FIG. 6 is a diagram showing an example of a functional configuration of a base station 10 according to an embodiment of the present invention; [Fig. 7] FIG. 7 is a diagram showing an example of a functional configuration of a terminal 20 according to an embodiment of the present invention;
[Fig. 8] FIG. 8 is a diagram showing an example of a hardware configuration of an apparatus according to an embodiment of the present invention.

### DETAILED DESCRIPTION OF THE INVENTION

Hereinafter, embodiments of the present invention will be described with reference to the drawings. It should be noted that the embodiments described below are merely examples, and embodiments to which the present invention is applied are not limited to the following embodiments.

In the operation of the wireless communication system according to the embodiment of the present invention, an existing technology may be used as appropriate. The existing technology is, for example, existing NR or LTE, but is not limited to existing NR or LTE.

### (System Configuration Example)

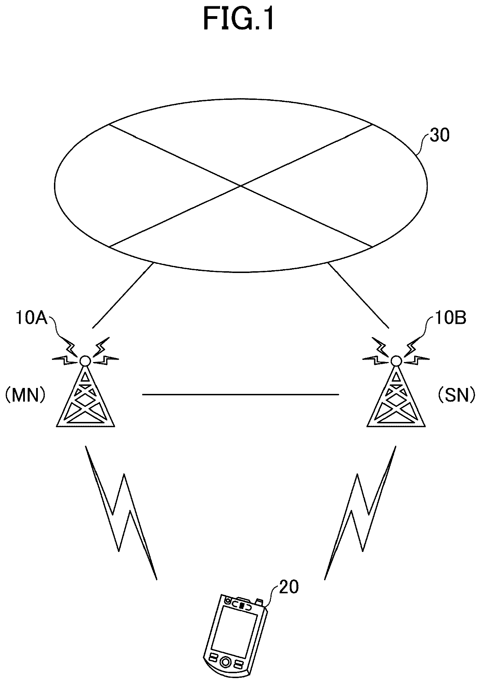

FIG. 1 is a diagram for explaining an example of a wireless communication system according to an embodiment of the present invention. FIG. 1 illustrates a configuration example of a wireless communication system in a case where dual connectivity (DC) is executed. As shown in FIG. 1, a base station 10A serving as a master node (MN) and a base station 10B serving as a secondary node (SN) are provided. The base stations 10A and 10B are each connected to a core network 30. A terminal 20 can communicate with both the base stations 10A and 10B. Note that the base station 10A may be called an MN 10A and the base station 10B may be called an SN 10B.

A cell group provided by the base station 10A that is the MN is referred to as a master cell group (MCG), and a cell group provided by the base station 10B that is the SN is referred to as a secondary cell group (SCG). Also, in dual connectivity, the MCG includes one PCell and 0 or more SCells, and the SCG includes one PSCell (Primary SCG Cell) and 0 or more SCells.

Note that the dual connectivity to which the present invention is applicable may be a communication method using two communication standards, and any communication standards may be combined. For example, the combination may be any one of LTE and LTE, NR and NR, NR and LTE, NR and 6G standard, and LTE and 6G standard. Note that an eNB of LTE may be an NG-eNB. When two communication standards are different from each other, both of the two communication standards may be applied to the MN or may be applied the SN. For example, when a combination of NR and LTE is taken as an example, the MN may be NR and the SN may be LTE, or the SN may be LTE and the MN may be LTE. Also, the dual connectivity may be a communication method using three or more communication standards and may be referred to by another name different from the dual connectivity. Hereinafter, when the base stations 10A and 10B are not distinguished from each other, each of them is referred to as a base station 10.

The base station 10 is a communication apparatus that provides one or more cells and performs wireless communication with a terminal 20. A physical resource of a radio signal is defined in a time domain and a frequency domain. The time domain may be defined by the number of OFDM symbols, and the frequency domain may be defined by the number of subcarriers or the number of resource blocks. A TTI (Transmission Time Interval) in the time domain may be a slot, or a TTI may be a subframe.

The base station 10 is capable of performing carrier aggregation in which a plurality of cells (a plurality of CCs (component carriers)) are aggregated to perform communication with the terminal 20. In carrier aggregation, one PCell (primary cell) and one or more SCells (secondary cells) are used. Note that a PSCell and an SCell are used in the SCG.

The base station 10 transmits a synchronization signal, system information, and the like to the terminal 20. The base station 10 transmits a control signal or data to the terminal 20 in downlink (DL), and receives a control signal or data from the terminal 20 in uplink (UL). Here, what is transmitted on a control channel such as a PUCCH or a PDCCH is referred to as a control signal, and what is transmitted on a shared channel such as a PUSCH or a PDSCH is referred to as data. However, this naming convention is merely an example.

The terminal 20 is a communication apparatus having a wireless communication function, such as a smartphone, a mobile phone, a tablet, a wearable terminal, and an M2M (Machine-to-Machine) communication module. The terminal 20 receives a control signal or data from the base station 10 in DL and transmits a control signal or data to the base station 10 in UL to utilize various communication services provided by the wireless communication system. Note that the terminal 20 may be referred to as a UE, the base station 10 of NR may be referred to as a gNB, and the base station of LTE may be referred to as an eNB.

In the following description, unless otherwise specified, as an example, a case where the MN 10A is an eNB (or an NG-eNB) and the SN 10B is a gNB, that is, a case where the system according to the present embodiment is an EN-DC (or an NGEN-DC) will be described. In the present embodiment, in particular, Inter-band EN-DC will be described. The inter-band EN-DC is an EN-DC of a band combination having different bands between LTE and NR, such as DC_1A_n8A, DC_1A-42D_n79A (Non-Patent Document 3). However, the present invention is not limited to the EN-DC and is also applicable to other DCs.

### (Problem)

### <Problem of Existing simultaneousRxTxInterBandENDC>

In the existing technology (example: Non-Patent Document 4), an information element called simultaneousRxTxInterBandENDC is included in UE Capability transmitted from the terminal 20.

The simultaneousRxTxInterBandENDC is capability information indicating whether or not transmission is possible, during reception in a certain (TDD or FDD) band, in a different TDD band, or whether or not reception is possible, during transmission in a certain TDD band, in a different (TDD or FDD) band, in Inter-band EN-DC. This information is 1-bit (supported/not) information for each band combination.

Note that, in addition to the inter-band EN-DC, simultaneous Rx/Tx capabilities for NR CA and for NR-DC are defined. The problem of the existing simultaneousRxTxInterBandENDC will be specifically described.

Here, as an example, it is assumed that the band combination of EN-DC is DC_1A-42C_n79A. In addition, regarding the band pair of LTE and NR in DC_1A-42C_n79A, it is assumed that the terminal 20 supports the following functions.

- 1A (LTE FDD 2 GHz) - n79A (NR TDD 4. 5 GHz): simultaneous transmission and reception is possible
- 42C (2CC×LTE TDD 3. 5 GHz) - n79A (NR TDD 4.5 GHz): simultaneous transmission/reception is impossible.

The existing simultaneousRxTxInterBandENDC is information for each band combination, and if there is at least one band pair for which simultaneous transmission and reception is not possible in the band combination, it is assumed that the terminals 20 notify the network of a capability indicating "not supported".

Therefore, since the terminal 20 supporting the above function cannot perform simultaneous transmission and reception in the band pair of 42-n79, the terminal 20 notifies the network of "not supported" by the simultaneousRxTxInterBandENDC of 1A-42_n79.

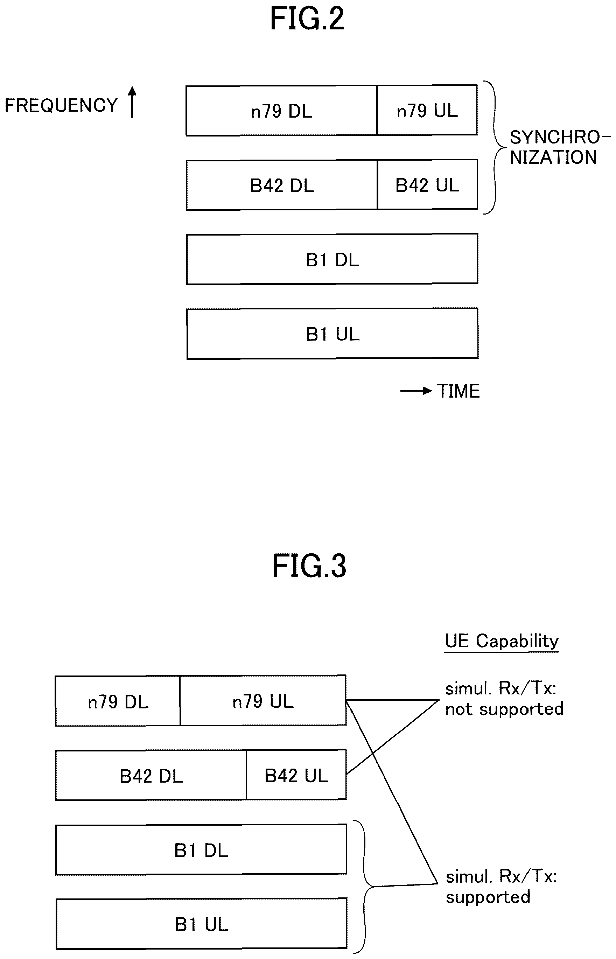

Here, it is assumed that the terminal 20 supporting the above-described function want to connect to a network (that is, MN 10A and SN 10B) that provide a communication service in the following band configuration. FIG. 2 illustrates the following band configuration.

- LTE Band 1: FDD (that is, capable of transmission and reception at any timing)
- LTE Band 42 and NR Band n79: TDD, and DL/UL of TDD are completely synchronized (reception of n79 cannot occur during transmission of Band 42, and vice versa).

In order to connect to this network, the terminal 20 does not need to support simultaneous transmission and reception of 42-n79, but needs to support simultaneous transmission and reception of 1-n79.

On the other hand, on the network side, whether or not simultaneous transmission and reception of 1-n79 is possible is determined only by whether or not simultaneousRxTxInterBandENDC is "supported". That is, the network can configure an EN-DC of 1-42_n79 only for a terminal whose simultaneousRxTxInterBandENDC in 1-42_n79 is "supported".

That is, although the terminal 20 having the above-described function can functionally perform EN-DC of 1-42_n79 because requirement for simultaneous transmission and reception is satisfied in the network of the above-described example for each band pair unit (i.e. 1-n79, 42-n79), the terminal 20 can only notify that simultaneousRxTxInterBandENDC in 1-42_n79 is not supported, and thus cannot configure the EN-DC in terms of signaling.

### <Solution to simultaneousRxTxInterBandENDC Problem>

There is a possibility that the above problem can be solved by the terminal 20 notifying supported/not of the simultaneousRxTxInterBandENDC in units of band pair. To be more specific, in the example of the band combination of 1-42_n79 described above, the terminal 20 notify the network of, for example, the following information as simultaneousRxTxInterBandENDC.

- band pair of 1-n79: supported
- band pair of 42-n79: not supported

The capability information of simultaneousRxTxInterBandENDC per band pair as described above is provided by notification from the MN 10A to the SN 10B.

### <Problem related to specifying band pair>

In the existing technology, for example, when configuring EN-DC, candidates of band combinations that can be configured by the gNB (SN 10B) are transmitted from the eNB (MN 10A) to the gNB by using allowedBC-ListMRDC (Non-Patent Document 4).

The field of the allowedBC-ListMRDC indicates which of one or more band combinations in the UE Capability notified from the terminal 20 to the MN10A is usable in the gNB (SN10B). The gNB selects an SCG band combination from the available band combinations.

Band combinations of the UE capability are notified by allowedBC-ListMRDC, in which fallback band combination is omitted. Note that the fallback band combination corresponds to a subset of an original band combination. For example, when the original band combination is 1-19-42_n79, for example, 1-19-n79, 1-42-n79, 1-19-42, 1_n79 and the like in which a band that cannot be actually used by the eNB is removed are examples of the fallback band combination.

Since the fallback band combination is omitted as described above, a band that is not used by the eNB may also be included in each band combination of the allowedBC-ListMRDC.

That is, in the existing technology, the band actually used by the eNB is unknown to the gNB at the time of configuring EN-DC or the like. Therefore, even if the eNB notifies the gNB of the simultaneousRxTxInterBandENDC on a band pair basis as described above, it is not clear to which band pair should be referred to determine a band combination available for the terminal 20. Specific examples will be described below.

As described above, a terminal 20 supporting the following function will be described as an example.

- 1A (LTE FDD 2 GHz) - n79A (NR TDD 4. 5GHz) : simultaneous transmission and reception is possible
- 42C (2CC × LTE TDD 3. 5 GHz) - n79A (NR TDD 4.5 GHz) : simultaneous transmission and reception is not possible

In this case, the terminal 20 notifies the network of the following information as the simultaneousRxTxInterBandENDC on a band pair basis. In addition, the terminal 20 notifies the network of capability information including "1-42_n79" as a band combination supported by the terminal 20.

- band pair of 1_n79: supported
- band pair of 42_n79: not supported

At the time of configuring EN-DC or the like, since the fallback band combination is not included in the allowedBC-ListMRDC as described above, even when the eNB performs CA of band 1 + band 42 and even when the eNB uses only band 1 but does not use band 42, "1-42_n79" is included in the allowedBC-ListMRDC notified from the eNB to the gNB, and "1_n79" or the like is not included.

Here, a network having the band configuration shown in FIG. 3 is assumed as an example. The band configuration of FIG. 3 is the same as the band configuration shown in FIG. 2 in terms of band combination, but is different from the band configuration shown in FIG. 2 in that 42-n79 is asynchronous.

In the band configuration shown in FIG. 3, there is a possibility of simultaneous transmission and reception in any band pair of 1-n79 and 42-n79. That is, in order for a terminal to perform EN-DC communication in the band configuration of FIG. 3, the terminal needs to be capable of simultaneous transmission and reception in any of the band pairs 1-n79 and 42-n79.

On the other hand, the assumed terminal 20 cannot perform simultaneous transmission and reception of the band pair of 42_n79, but can perform simultaneous transmission and reception of the band pair of 1_n79. Therefore, when the eNB uses only band 1, the terminal 20 can perform communication by 1_n79, and the terminal 20 can be configured with EN-DC of 1_n79. However, the terminal 20 cannot be configured with EN-DC including band 42 such as 1-42_n79.

On the other hand, 1-42_n79 is set in the allowedBC-List regardless of whether or not band 42 is used in LTE, and even when the eNB uses only band 1, EN-DC of 1_n79 cannot be configured.

### (Outline of Embodiment)

Hereinafter, a technique for solving the above problem will be described. First, an outline of the present technology will be described. In the above example of the problem, it is assumed that the eNB (MN 10A) uses only band 1. When the gNB (SN 10B) can recognize that the eNB uses only band 1, the gNB (SN 10B) can determine that EN-DC of 1_n79 can be configured for the terminal 20 based on "band pair of 1_n79: supported" of the following two pieces of information.

- band pair of 1_n79: supported
- band pair of 42_n79: not supported

Based on the above viewpoint, in the present embodiment, at the time of configuring DC for the terminal 20 or the like, information is transmitted from the MN 10A to the SN 10B for helping the SN 10B to determine which band pair information to refer to (or to evaluate) in the capability information indicating availability of simultaneous transmission and reception for each band pair received from the MN 10A. The "information for helping" may be referred to as auxiliary information or support information. Hereinafter, this will be referred to as auxiliary information.

### (Basic operation example)

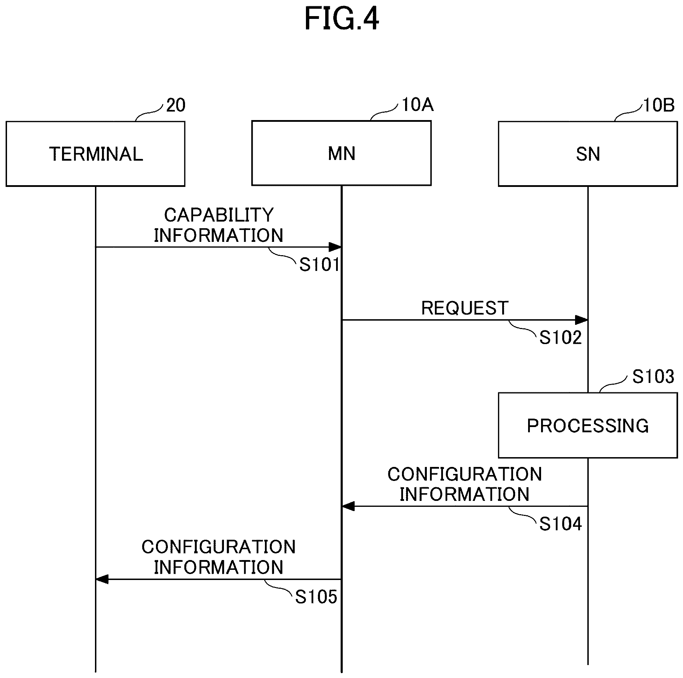

A basic operation example in the present embodiment will be described with reference to FIG. 4. Here, description will be made assuming an operation in a case where the MN 10A is an eNB and the SN 10B is a gNB, that is, in a case where configuration of EN-DC is performed. However, EN-DC is merely an example of DC. The technique according to the present invention can also be applied to a case where the MN 10A is an NG-eNB and the SN 10B is a gNB (a case of NGEN-DC), a case where the MN 10A is a gNB and the SN 10B is an eNB (a case of NE-DC), a case where the MN 10A is a gNB and the SN 10B is a gNB (a case of NR-DC), DCs composed of combinations of RATs other than the above cases, and the like.

In S101, the UE 20 transmits its own capability information (UE capability) to the MN 10A. The UE capability includes information on a configuration or a function supported by the terminal 20. For example, the UE capability includes band combinations supported by the terminal 20, simultaneous transmission/reception availability information for each band combination, simultaneous transmission/reception availability information for each band pair, and the like.

In S102, the MN 10A transmits a request message (e.g., CG-ConfigInfo, SgNB addition request) to the SN 10B. This request message is a message for requesting the SN 10B to add an SN (to establish an SCG). The request message may be a message of a request to change the SCG.

The request message includes the capability information of the terminal 20 received in S101, the above-described allowedBC-ListMRDC (indicating which band combination (s) among band combinations supported by the terminal 20 is available to the SN 10B), and the above-described auxiliary information.

In S103, the SN 10B performs processing related to configuration of EN-DC based on the information received from the MN 10A in S102. For example, based on the information received from the MN 10A in S102, the SN 10B selects an SCG band combination that is bands used in the SN side (in this example, the NR side) from band combinations indicated by allowedBC-ListMRDC, and generates configuration information (example: NR RRC configuration message) including radio resource configuration information for the SCG band combination.

In S104, the SN10B transmits the above configuration information to the MN 10A. In S105, the MN 10A transmits configuration information (example: RRCConnectionReconfiguration) including the configuration information received from the SN 10B to the terminal 20.

A specific example will be described. In S102, it is assumed that the SN 10B receives "1-42_n79" by the allowedBC-ListMRDC, receives "band pair of 1n79: supported, band pair of 42_n79 : not supported" as simultaneous transmission/reception availability information for each band pair, and receives information "MN 10A uses band 1 but does not use band 42" as auxiliary information.

In this case, in S103, the SN10B determines that the terminal 20 can use "1_n79" as a fallback band combination of "1-42_n79", selects "n79" as the SCG band combination, determines a PSCell (CC) of "n79", determines radio resource configuration information thereof, and transmits configuration information including the radio resource configuration information to the MN 10A as the configuration information of S104. In S105, the MN 10A transmits configuration information including the above configuration information to the terminal 20.

### (Example of method of notification of auxiliary information)

Hereinafter, the following Examples 1 to 3 will be described as specific examples of notification methods of auxiliary information. In Examples 1 and 2, existing signaling is used. New signaling is used in Example 3. Although the existing signaling is used in the Example 1 and the Example 2, the use of the existing signaling in the present embodiment is a new technology that does not exist in the existing technology.

### <Example 1>

In Example 1, servCellInfoListMCG-EUTRA -r16 (Non-Patent Document 4), which is an information element included in CG-ConfigInfo, is used as auxiliary information. It should be noted that servCellInfoListMCG-EUTRA-r16 used in Example 1 may be written as servCellInfoListMCG-EUTRA, as an information element not limited to a specific release.

CG-ConfigInfo is a message transmitted from the MN 10A to the SN 10B at the time of DC configuration or the like, and is transmitted in S102 in the diagram shown in FIG. 4.

The servCellInfoListMCG-EUTRA includes information indicating center frequency (EARFCN) and bandwidth of DL/UL of each serving cell in the MN 10A side (on the LTE side in the case of EN-DC). In S103 of FIG. 4, the SN 10B can specify a band pair to referred to by using this information as auxiliary information.

In the above-described concrete example, the SN 10B can determine, for example, that "the MN 10A uses band 1 but does not use band 42" from the servCellInfoListMCG-EUTRA received from the MN 10A, and can determine that "1_n79" can be configured as a fallback band combination of "1-42_n79" for the terminal 20 by referring to the band pair information of 1_n79. If a frequency of band 1 is designated as a carrier frequency of the serving cell by servCellInfoListMCG-EUTRA but a frequency of band 42 is not designated, it can be determined that "the MN 10A uses band 1 but does not use band 42".

Here, in the field description of Non-Patent Document 4, " Indicates the carrier frequency and the transmission bandwidth of the serving cell(s) in the MCG in intra-band (NG)EN-DC. The field is needed when MN and SN operate serving cells in the same band for either contiguous or non-contiguous intra-band band combination or LTE NR inter-band band combinations where the frequency range of the E-UTRA band is a subset of the frequency range of the NR band (as specified in Table 5.5B.4.1-1 of TS 38.101-3 [34]) in (NG)EN-DC." is described as description of servCellInfoListMCG-EUTRA.

That is, the servCellInfoListMCG-EUTRA in the existing technology is used when the MN and the SN operate the serving cell in the same band, and is not used for the inter-band EN-DC assumed in the present embodiment.

In the present embodiment, for example, it is assumed that the above limitation is deleted in the specification, and servCellInfoListMCG-EUTRA can be used for a specific usage of a band pair (= band used in MN) of simultaneousRx/Tx in (NG) EN-DC. Note that servCellInfoListMCG-EUTRA may be referred to as "use frequency information".

### <Example 2>

In Example 2, selectedBandEntriesMNList in ConfigRestrictInfoSCG (Non-Patent Document 4), which is an information element included in CG-ConfigInfo, is used as auxiliary information.

The selectedBandEntriesMNList is an information element indicating which band (one or more bands) is to be used by the MN, among a plurality of bands constituting band combinations indicated by allowedBC-ListMRDC, by using a list of indexes in the band combinations (a list indicating what number band is to be used). In S103 of FIG. 4, the SN 10B can specify a band pair to be referred to by using this information as auxiliary information.

In the above-described concrete example, the SN 10B can determine that, for example, "MN 10A uses band 1 but does not use band 42 among band 1 and band 42" from the selectedBandEntriesMNList received from the MN 10A, and can determine that "1_n79" can be configured as a fallback band combination of "1-42_n79" for the terminal 20 by referring to the band pair information of 1_n79.

In the field description of the Non-Patent Document 4, following description is given as an explanation of selectedBandEntriesMNList: "A list of indices referring to the position of a band entry selected by the MN, in each band combination entry in allowedBC-ListMRDC IE. BandEntryIndex 0 identifies the first band in the bandList of the BandCombination, BandEntryIndex 1 identifies the second band in the bandList of the BandCombination, and so on. This selectedBandEntriesMNList includes the same number of entries, and listed in the same order as in allowedBC-ListMRDC. The SN uses this information to determine which bands out of the NR band combinations in allowedBC-ListMRDC it can configure in SCG. This field is only used in NR-DC".

That is, the selectedBandEntriesMNList in the existing technology is used only for NR-DC and is not used for EN-DC assumed in the present embodiment.

In the present embodiment, for example, it is assumed that the above limitation is deleted in the technical specification, and selectedBandEntriesMNList can be used not only in the NR-DC but also in the (NG) EN-DC, and for example, it is used for specifying a band pair of simultaneous Rx/Tx (= band used in MN). The selectedBandEntriesMNList may be referred to as selected band information.

### <Example 3>

In Example 3, a new information element that is not present in the existing technology is used as the auxiliary information. As an example, one or a plurality of pieces of information (1) to (4) listed below is(are) added as a new information element to any layer immediately below the CG-ConfigInfo message or any layer below the CG-ConfigInfo message. Thereby, by transmitting the CG-ConfigInfo message from the MN 10A to the SN 10B, the auxiliary information is also transmitted from the MN 10A to the SN 10B.
(1) List of frequencies (EARFCN or NR-ARFCN) in use in the MN 10A
(2) List of bands in use in the MN 10A
(3) List of band pairs, or indexes thereof, including a band to be used in the MN 10A, among band pairs for which simultaneous Rx/Tx (simultaneous transmission/reception availability information) is notified in the UE capability
(4) List of band pairs, or indexes thereof, including a band that is not used in the MN 10A, among band pairs for which simultaneous Rx/Tx (simultaneous transmission/reception availability information) is notified in the UE capability

The SN 10B that receives the information of (1) above as auxiliary information can operate in the same manner as in the case of receiving servCellInfoListMCG-EUTRA as auxiliary information described in Example 1.

The SN 10B receiving the information (2) as auxiliary information can perform the same operation as the case of receiving the selectedBandEntriesMNList as the auxiliary information described in Example 2.

A case where the SN 10B receives the information (3) as auxiliary information will be described. Similarly to the above-described concrete example, it is assumed that "1-42_n79" is notified to the SN 10B as the allowedBC-ListMRDC and the following information is notified to the SN 10B as the simultaneous Rx/Tx for each band pair.

- Band pair of 1_n79: supported
- Band pair of 42_n79: not supported

In addition, it is assumed that, as the information (3), information indicating that the band pair including the band used in the MN 10A is "1_n79" is notified to the SN 10B. This means that band 1 is used but band 42 is not used in the MN 10A.

In this case, the SN 10B can determine that EN-DC of the band combination of "1_n79" can be configured for the terminal 20.

Also, in the above-described concrete example, it is assumed that, as the information (4), information indicating that the band pair including the band not used in the MN 10A is "42_n79" is notified to the SN 10B. Also in this case, the SN 10B can determine that EN-DC of the band combination of "1_n79" can be configured for the terminal 20.

It should be noted that one or any plurality of pieces of information (1) to (4) described above may be added to an X2AP message, or an XnAP message. For example, it may be added to SgNB Addition Request, SgNB Modification Request, or SgNB Modification Confirm as an X2AP message.

Also, it may be added to S-Node Addition Request, S-Node Modification Request, or S-Node Modification Confirm as an XnAP message.

### (Other Examples (Variations))

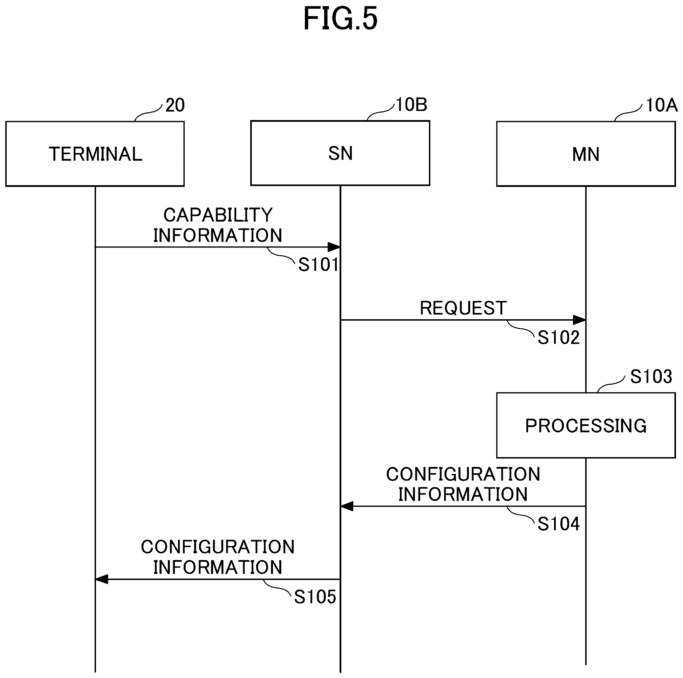

In the present embodiment, as shown in FIG. 4, an embodiment in which the auxiliary information is transmitted from the MN 10A to the SN 10B has been described, but this is an example. As shown in FIG. 5, the MN 10A and the SN 10B may be replaced with each other so that the MN 10A performs the operation of the SN 10B described above and the SN 10B performs the operation of the MN 10A described above.

In the example illustrated in FIG. 4, the SN 10B may directly transmit the configuration information created in S103 to the terminal 20 instead of transmitting the configuration information to the MN 10A. In the example illustrated in FIG. 5, the MN 10A may directly transmit the configuration information created in S103 to the terminal 20 instead of transmitting the configuration information to the SN 10B.

In addition, the existing message described in Example 1 and Example 2 is merely an example, and for example, an existing message, other than the existing message described in Example 1 and Example 2, including any information of the information shown in (1) to (4) may be used.

Further, the auxiliary information may be provided by notification from a node (example: MME, AMF, SMF, UPF) in the core network 30 to the SN 10B (or MN 10A). In this case, for example, the MN 10A (or SN 10B) periodically reports the auxiliary information (such as frequencies being used) to the node.

### (Effects of Embodiment)

As described above, by notifying the SN 10B of the auxiliary information, the SN 10B can appropriately determine the band usable in the terminal for dual connectivity. Therefore, even for a band combination that is a fallback band combination on the UE capability, it is possible to appropriately perform DC configuration in consideration of the UE capability indicating whether or not simultaneous transmission and reception are possible.

### (Apparatus Configuration)

Next, functional configuration examples of the base station 10 and the terminal 20 that execute processes and operations described above will be described. The base station 10 described below may be a MN 10A or a SN 10B. The base station 10 and the terminal 20 include functions of executing the operation in the above-described embodiment.

### <Base Station 10>

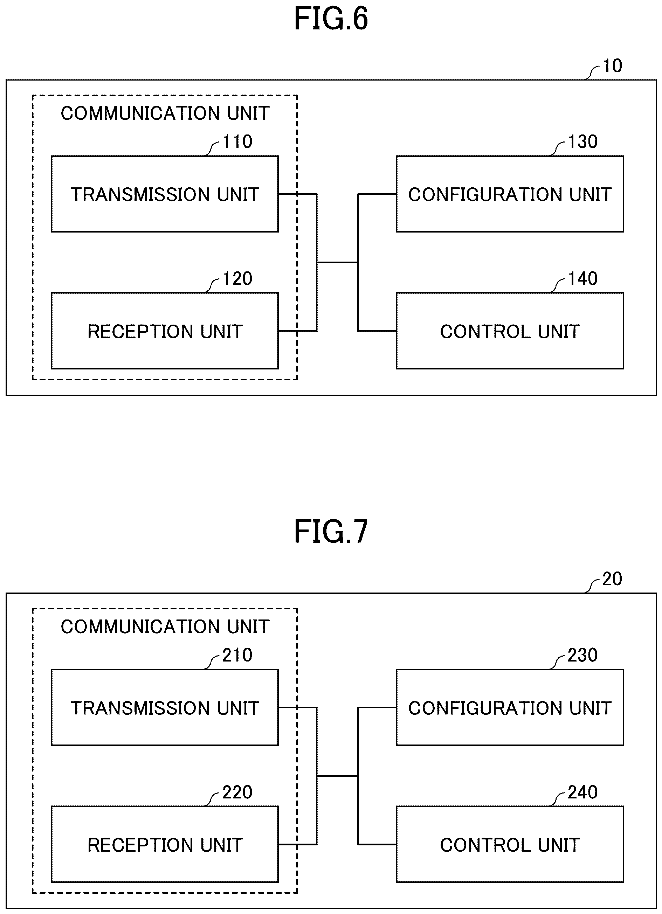

FIG. 6 is a diagram illustrating an example of a functional configuration of the base station 10. As illustrated in FIG. 6, the base station 10 includes a transmission unit 110, a reception unit 120, a configuration unit 130, and a control unit 140. The functional configuration shown in FIG. 6 is merely an example. As long as the operation according to the embodiment of the present invention can be executed, any name may be assigned to the functional category and the functional part. The transmission unit 110 and the reception unit 120 may be referred to as a communication unit.

The transmission unit 110 has a function of generating a signal to be transmitted to the terminal 20 side and wirelessly transmitting the signal. The reception unit 120 includes a function of receiving various signals transmitted from the terminal 20 and acquiring, for example, information of a higher layer from the received signal. The transmission unit 110 also has a function of transmitting information to another base station, and the reception unit 120 also has a function of receiving information from another base station.

The configuration unit 130 stores configuration information configured in advance and various kinds of configuration information to be transmitted to the terminal 20 in the storage device, and reads the configuration information from the storage device as necessary. The control unit 140 performs, for example, overall control of the base station 10 including control related to signal transmission and reception. It should be noted that a functional unit related to signal transmission in the control unit 140 may be included in the transmission unit 110, and a functional unit related to signal reception in the control unit 140 may be included in the reception unit 120. The transmission unit 110 and the reception unit 120 may be referred to as a transmitter and a receiver, respectively.

A node (device) in the core network 30 described above also has a configuration similar to that of the base station 10 illustrated in FIG. 6. However, the node in the core network 30 does not transmit and receive signals to and from the terminal 20, but transmits and receives signals to and from the base station 10 or another node by the transmission unit 110 and the reception unit 120.

### <Terminal 20>

FIG. 7 is a diagram illustrating an example of a functional configuration of the terminal 20. As illustrated in FIG. 7, the terminal 20 includes a transmission unit 210, a reception unit 220, a configuration unit 230, and a control unit 240. The functional configuration shown in FIG. 7 is merely an example. As long as the operation according to the embodiment of the present invention can be executed, the function division and the name of the functional unit may be any one. The transmission unit 210 and the reception unit 220 may be referred to as a communication unit.

The transmission unit 210 generates a transmission signal from transmission data and wirelessly transmits the transmission signal. The reception unit 220 wirelessly receives various signals and acquires a signal of a higher layer from the received signal of the physical layer.

The configuration unit 230 stores various types of configuration information received from the base station 10 by the reception unit 220 in the storage device, and reads the configuration information from the storage device as necessary. The configuration unit 230 also stores configuration information that is configured in advance. The control unit 240 performs overall control of the terminal 20 including control related to signal transmission and reception. It should be noted that a functional unit related to signal transmission in the control unit 240 may be included in the transmission unit 210, and a functional unit related to signal reception in the control unit 240 may be included in the reception unit 220. The transmission unit 210 and the reception unit 220 may be referred to as a transmitter and a receiver, respectively.

### (Hardware configuration)

The block diagrams (Fig. 6 and Fig. 7) used in the description of the embodiment described above illustrate the block of functional unit. Such functional blocks (configuration parts) are attained by at least one freely-determined combination of hardware and software. In addition, an attainment method of each of the functional blocks is not particularly limited. That is, each of the functional blocks may be attained by using one apparatus that is physically or logically coupled, by directly or indirectly (for example, in a wired manner, over the radio, or the like) connecting two or more apparatuses that are physically or logically separated and by using such a plurality of apparatuses. The functiona; block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a functional block (a configuration part) that functions transmission is referred to as the transmitting unit or the transmitter. As described above, the attainment method thereof is not particularly limited.

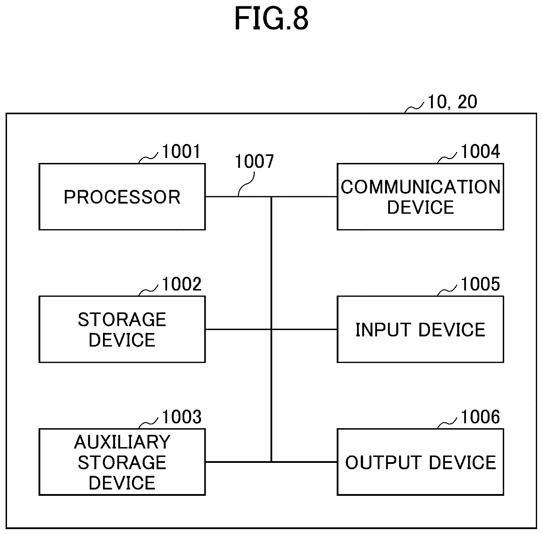

For example, the base station 10, the terminal 20, and the like in one embodiment of this disclosure may function as a computer for performing the processing of a radio communication method of this disclosure. Fig. 8 is a diagram illustrating an example of a hardware configuration of the base station 10, the terminal 20, and the apparatus 30 in the core NW side according to one embodiment of this disclosure. The base station 10, the terminal 20, and the apparatus 30 in the core NW side described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in Fig. 6 may be attained by a control program that is stored in the storage device 1002 and is operated by the processor 1001. In addition, for example, the control unit 240 of the terminal 20 illustrated in Fig. 7 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of storing a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Summary of Embodiments)

The present specification discloses a base station, a wireless communication system, and a communication method as described in the following items.

### (Item 1)

A base station including:
a transmission unit configured to transmit auxiliary information used for determining a band usable for dual connectivity in a terminal to another base station; and
a reception unit configured to receive configuration information generated based on the auxiliary information from the other base station.

### (Item 2)

A base station including:
a reception unit configured to receive auxiliary information used for determining a band usable for dual connectivity in a terminal from another base station; and
a transmission unit configured to transmit configuration information generated based on the auxiliary information to the other base station.

### (Item 3)

The base station as described in item 1 or 2, wherein
the auxiliary information is one or more of information on a frequency used in a base station that transmits the auxiliary information, information on a band used in a base station that transmits the auxiliary information, information on a band pair including a band used in a base station that transmits the auxiliary information, and information on a band pair including a band not used in a base station that transmits the auxiliary information.

### (Item 4)

The base station as described in any one of items 1 to 3, wherein
the band usable for dual connectivity in the terminal is determined based on the auxiliary information and capability information indicating whether or not simultaneous transmission and reception are possible for each band pair in the terminal.

### (Item 5)

A wireless communication system including:
a first base station including:
a transmission unit configured to transmit auxiliary information used for determining a band usable for dual connectivity in a terminal to a second base station; and
a reception unit configured to receive configuration information generated based on the auxiliary information from the second base station, and
the second base station including:
   a reception unit configured to receive the auxiliary information from the first base station; and
   a transmission unit configured to transmit configuration information generated based on the auxiliary information to the first base station.

### (Item 6)

A communication method executed by a base station, including:
a transmission step of transmitting auxiliary information used for determining a band usable for dual connectivity in a terminal to another base station; and
a reception step of receiving configuration information generated based on the auxiliary information from the other base station.

According to any one of items 1 to 6, the base station can appropriately determine a band usable in the terminal for dual connectivity. According to the item 3, various auxiliary information can be used, for example, an existing message or a new message can be used. According to the item 4, since the capability information indicating the availability of the simultaneous transmission and reception for each band pair is used, it is possible to perform accurate configuration in consideration of the availability of the simultaneous transmission and reception.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such apparatuses may be attained by hardware, software, or a combination thereof. Each software that is operated by a processor of the base station 10 according to the embodiment of the invention and software that is operated by a processor of the terminal 20 according to the embodiment of the invention may be stored in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be stored in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed based on a value represented by 1 bit (0 or 1), may be performed based on a truth-value (Boolean: true or false), or may be performed based on a numerical comparison (for example, a comparison with a predetermined value).

Regardless of whether the software is referred to as software, firmware, middleware, a microcode, a hardware description language, or any other name, the software should be broadly interpreted to indicate a command, a command set, a code, a code segment, a program code, a program, a sub-program, a software module, an application, a software application, a software package, a routine, a subroutine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or any combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe.

Here, TTI, for example, indicates minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it may not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural .

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to an explicit notification, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
30 core network
1001 processor
1002 storage device
1003 auxiliary storage device
1004 communication device
1005 input device
1006 output device

## Claims

1. A base station comprising:
a transmission unit configured to transmit auxiliary information used for determining a band usable for dual connectivity in a terminal to another base station; and
a reception unit configured to receive configuration information generated based on the auxiliary information from the other base station.

2. A base station comprising:
a reception unit configured to receive auxiliary information used for determining a band usable for dual connectivity in a terminal from another base station; and
a transmission unit configured to transmit configuration information generated based on the auxiliary information to the other base station.

3. The base station as claimed in claim 1 or 2, wherein
the auxiliary information is one or more of information on a frequency used in a base station that transmits the auxiliary information, information on a band used in a base station that transmits the auxiliary information, information on a band pair including a band used in a base station that transmits the auxiliary information, and information on a band pair including a band not used in a base station that transmits the auxiliary information.

4. The base station as claimed in any one of claims 1 to 3, wherein
the band usable for dual connectivity in the terminal is determined based on the auxiliary information and capability information indicating whether or not simultaneous transmission and reception are possible for each band pair in the terminal.

5. A wireless communication system comprising:
a first base station comprising:
a transmission unit configured to transmit auxiliary information used for determining a band usable for dual connectivity in a terminal to a second base station; and
a reception unit configured to receive configuration information generated based on the auxiliary information from the second base station, and
the second base station comprising:
a reception unit configured to receive the auxiliary information from the first base station; and
a transmission unit configured to transmit configuration information generated based on the auxiliary information to the first base station.

6. A communication method executed by a base station, the communication method comprising:
a transmission step of transmitting auxiliary information used for determining a band usable for dual connectivity in a terminal to another base station; and
a reception step of receiving configuration information generated based on the auxiliary information from the other base station.
